Europäisches Patentamt

**European Patent Office**

Office européen des brevets

(11) Publication number: **0 102 109**
**A1**

(12) **EUROPEAN PATENT APPLICATION**

(21) Application number: **83201123.3**

(22) Date of filing: **29.07.83**

(51) Int. Cl.³: **G 06 F 3/16**
**G 07 F 7/10**

(30) Priority: **23.08.82 NL 8203283**

(43) Date of publication of application:
**07.03.84 Bulletin 84/10**

(84) Designated Contracting States:
**CH DE FR GB IT LI SE**

(71) Applicant: **N.V. Philips' Gloeilampenfabrieken**
**Groenewoudseweg 1**
**NL-5621 BA Eindhoven(NL)**

(72) Inventor: **Bruno, Richard**
**c/o INT. OCTROOIBUREAU B.V. Prof. Holstlaan 6**
**NL-5656 AA Eindhoven(NL)**

(74) Representative: **Strijland, Wilfred et al,**
**INTERNATIONAAL OCTROOIBUREAU B.V. Prof.**
**Holstlaan 6**
**NL-5656 AA Eindhoven(NL)**

(54) **Programmable system for executing voice commands, and execution station, programming station, and key element for use in such a system.**

㊼ A system is described for the execution of a set of voice commands. The execution station (20) is constructed to be the same for all speakers. However, a speaker receives a key element (24, 26, 28) with a memory in which personal speech information of the holder is stored. Prior to speaking, the key element is presented to the execution station, so that the speech information stored becomes available for use during the processing of speech presented. After such presentation, the execution station operates with speaker-dependent recognition. The execution station can always be reprogrammed.

FIG.1

EP 0 102 109 A1

Programmable system for executing voice commands, and
execution station, programming station, and key element
for use in such a system.

        The invention relates to system for the selective execution of a set of voice commands which are to
be separately inputted, comprising a first speech input
member, a first speech processing element which is connected to the first speech input member, a comparison
element which is connected to the first speech processing
element by way of a first input, a reference element which
can be coupled to a second input of the comparison element,
and an execution element for executing the commands of
said set under the selective control of an output signal
of the comparison element. In conventional systems the
commands are usually inputted by means of keys etcs.;
such systems will not be considered herein. A system in
accordance with the invention, however, in which the commands are inputted as voice commands offers special advantages in many situations, for example when a keyboard
is not feasible, for example in the case of untrained or
visually or motorically handicapped persons, or when the
commands are to be given by persons whose hands are already engaged (case A). A system of the kind set forth
is known from United States Patent Specification
3,883,850. This system involves a learning phase during
which the speaker inputs a given amount of speech; the
speech is processed and given data thus formed are stored
in a random access memory. This phase is followed by an
execution phase during which the speaker voices the commands to be executed. On the basis of the content of the
random access memory which thus forms the reference element, the speech and hence the commands are recognized
and subsequently executed (solution I). For the execution
phase, the relevant system is thus specially programmed
for a given person and usually it cannot be used for commands spoken by another person: this is the first, so-called speaker-dependent solution. (If the storage capacity of the reference element is sufficiently large, programming can also be performed for a limited group of persons; in that case there may be provided a person selection switch which comprises as many positions as there are persons in the limited group). This first solution is usually acceptable in case A, at least if the learning phase does not require an excessive amount of time: usually a number of words must be repeated ten times or even more in the learning phase. Notably in the case of frequently changing speakers, this may be a substantial drawback. It is possible to program the system for all (feasible) speakers in an identical manner (solution II), so that the learning phase is not required (or only once). It has been found, however, that this speaker-independent recognition substantially increases the risk of errors in comparison with the first solution: a command may be not recognized, a command may be incorrectly recognized, or an arbitrary unit of speech may be unwarrentedly recognized as a "real" command. Furthermore, such speaker-independent programming allows only a rather small set of commands; moreover, usually some persons are not recognized at all, for example persons having a foreign accent or a speech defect.

Another situation in which the inputting of voice commands is attractive when the absence of keys and the like reduces the risk of mechanical damage, for example damage liable to be caused by vandalism. Such a situation could occur in the case of unattended bank terminals which issue a selectable amount of bank notes to qualified account holders and for which a recognition step must be performed in order to prevent payment to non-authorized persons (case B). Each transaction then consists of two parts, that is to say verification of whether the person involved is an authorized account holder and the recognition of the command indicating the desired amount of bank notes. In such a case the speaker-
dependent recognition of, for example, the command specifying said amount, would require that a learning phase
would precede the commands proper. The conventional way
of implementing such a learning phase would then be very
time consuming. On the other hand, the drawbacks inherent
in solution II (speaker independent recognition) still
remain. It is to be noted that the invention does not concern a system that may only verify the identity of the
speaker from his or her voice; proposals have already
been made in this respect. Moreover, the result of such
a veryfication is only singularly "O.K." or "not-O.K.".

It is an object of the invention to provide a
very quickly programmable system of the kind set forth
which combines for the speaker the advantages of the solutions I (speaker-dependent recognition with adequate
accuracy and an ample command vocabulary) and II (speaker-
independent operation, so that the learning phase can be
dispensed with and a system is obtained which is quickly
operational). The object is achieved in a first embodiment in that the first speech input member, the first
speech processing element, the comparison element and
the execution element are accommodated in an execution
station which also comprises a positioning member with a
detection means and an externally activatable start means,
at least a part of the reference element being accommodated as a memory in an external, portable, key element in
order to store personal speech information of a holder
of the key element in said memory, the dimensions of the
positioning member and the detection means being adapted
to those of the key element, the positioning member and
the key element comprising matching data transfer means
for transferring, under the control of an activation signal from said start means, at least a part of the personal
speech information from said memory to the execution station and hence to said comparison element, so that the
execution station can perform a speaker-dependent recognition of said commands, said system also comprising a programming station with a second speech input member, a second speech processing element which is connected to the second speech input member, and an output member which is connected to the second speech processing element and which can be coupled to a key element presented thereto by way of matching data transfer means in order to load the memory of said key element with personal speech information obtained by way of the second speech processing element. The key element thus contains as it were a vocabulary of commands for recognition by comparison of the speech patterns. For example, the key element can directly contain the entire command vocabulary. Alternatively, the commands may result in specific bit series which are compared with reference series. Thus, in accordance with the foregoing notably the comparison is programmed to be speaker-dependent.

The object is achieved in a second embodiment in that the first speech input member, the first speech processing element, the comparison element and the execution element are accommodated in an execution station which also comprises a positioning member with a detection means and an externally activatable start means, the first speech processing element having an additional input for receiving personal control signals from a control means having a storage capacity for said personal control signals, at least a part of said storage capacity being accommodated as a memory in an external, portable, key element in order to store in said memory personal control signals of a holder of the key element, the dimensions of the positioning member and the detection means being adapted to those of the key element, the positioning member and the key element comprising matching data transfer means for transferring, under the control of an activation signal from said start means, at least a part of the personal control signals from said memory to the execution station and hence to said first speech processing element, so that the first speech processing element can perform a speaker-dependent speech processing operation and hence the execution element can perform a speaker-dependent recognition of said commands, said system also comprising a programming station with a second speech input member, a second speech processing element which is connected to the second speech input member, and an output member which is connected to the second speech processing element and which can be coupled to a key element which is presented thereto by way of matching data transfer means in order to load the memory of the key element with personal voice parameter signals which are derived by way of the second speech processing element and which serve as control signals for said control means. The key element thus contains data for the execution of the speech processing operation. These data may be, for example, a number of adjusting frequencies for filter banks or weighting factors for processing results.

The invention also relates to an execution station for use in a system of the kind set forth in which the detection means is accommodated in a positioning member in the form of a slotted member for the detection of the physical presence of a key element. A slotted member of this kind enables accurate positioning to be achieved. Thus, there need not be continuous contact between the programming station and the execution station so that, if desired, the latter can operate at a remote location for the recognition and execution of the commands.

Preferably, the first speech processing element and the comparison element are suitable for forming the start means while recognizing, independent of personal information from a key element, a voice start command in order to form said activation signal. The learning phase can thus also be initiated by a voice command (for example, "start" or "learn"). Only a small safety margin is required for this recognition, because any inconveniences caused by incorrect recognition are not substantial: it concerns only the information whereby the speaker-dependent recognition is correctly adjusted for a given speaker.

On the other hand, it is attractive for said start means to be mechanically activatable. It may be a start button or a switch which is operated by the positioning of the key element; this is a very reliable construction.

Preferably, the processing of the voice commands received requires the continuous presence of a positioned key element. The key element thus acts as a "contact key" and combines several functions. Moreover, less duplication of memory storage capacity of the key element in the execution station is required.

The invention also relates to a key element for use in a system of the kind set forth, which element is constructed substantially as a flat body and/or comprises connections for communicating read control signals and data signals between said memory and said execution station or said programming station, and/or said memory being suitable for the storage of voice parameter information. Such a key element can be readily adapted to the external circumstances at the user level or the system level. Moreover, the key element may also contain a wide variety of further subfunctions.

The invention also relates to a recognition element for use in a system or an execution station of the kind set forth which comprises, in addition to the first speech processing element and the comparison element, an input for an activation signal and a storage medium for external personal information to be received for the selective control of the processing of voice commands received. By a suitable choice of a command vocabulary, such a recognition element can be used as a module in a plurality of execution stations. A suit-

0102109

able vocabulary comprises, for example, go, stop, forward, backward, left, right, switch, up, down, faster, slower, signal, fixed, loose, more, less, the digits 0 to 9, receive, pay, correct, repeat.

By a suitable choice therefrom, in many cases a bank terminal as well as all car for the handicapped, a portal crane or a television game can be operated thereby.

BRIEF DESCRIPTION OF THE FIGURES

Embodiments of the invention will be described in detail hereinafter with reference to some Figures, by way of example,

Figure 1 is a block diagram of an execution station with some key elements;

Figure 2 shows a programming station;

Figures 3a, b, c show some examples of key elements;

Figure 4 shows a flow chart in order to illustrate the operation of an execution station;

Figure 5 shows a second flow chart in order to illustrate the operation of a programmable station.

DESCRIPTION OF THE PREFERRED EMBODIMENT AND SOME ALTERNATIVES

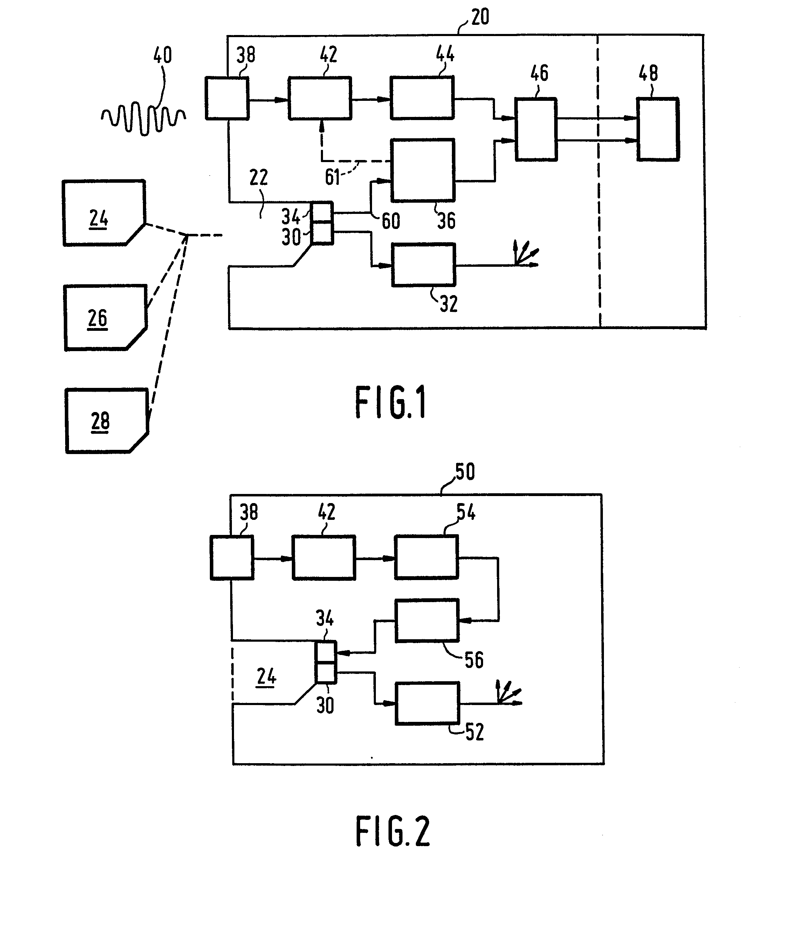

Figure 1 is a block diagram of an execution station with some key elements for use in a system in accordance with the invention. Block 20 represents the execution station which comprises a slotted member 22. The slotted member is suitable for accommodating one of the relevant key elements 24, 26, 28 at a time. The key elements will be described in detail hereinafter. The slotted member comprises a detection means 30 which is activated when one of the key elements is correctly positioned in the slotted member. The detection means may comprise, for example, a switch which is mechanically operated by the positioned key element. Alternatively, for example, the execution station comprises a photodetector and associated light emission element, the light path being interrupted by an inserted key element. When the detection means is activated, it despatches an activation signal to the control member. The control member 32 is thus activated and commences a start operation. The control member may be embodied in a microprocessor with built-in clock for synchronous operation and for supplying start signals, clock signals and sequence control signals to the other parts of the execution station and the positioned key element. The functions performed thereby will be described in detail hereinafter; the control lines have been omitted for the sake of simplicity. Alternatives for the formation of an activation signal are a separate start button or a facility to be included in the speech recognition section for the speaker-independent recognition of a start voice command (for example "start" or "learn"). In the latter case, the execution system must already be in a stand-by state and a clock present in the control member 32 must already form synchronizing clock signals. The start button may alternatively be present on the key element in order to issue a start code upon activation.

The connection member 34 in the present embodiment comprises means for conductive, capacitive, inductive, optical or other data transfer between a positioned key element and the execution station; for this purpose matching connections, induction loops and the like are provided, depending on the mode of transfer. Notably a memory present in the key element can thus be read. Reading can be performed in two ways. In a first mode, the entire memory of the key element is read and the speech data contained therein are successively applied, via line 60, to the local memory 36 for personal speech information. After completion of this operation, the relevant key element may be removed, for example when a LED-element (not shown) is lit by a control signal from the control member 32. The LED-lighting may be omitted when the read operation is very fast. The reading of the key element is non-destructive. Therefore, the key element can be used again, possibly in a different execution station.

In an alternative embodiment, the key element must remain present in the slotted member throughout the operation of the execution station. In that case only the necessary amount of information is read via line 60 and the construction of the element 36 may be simple, for example a register. In the latter case the control element 32 supplies selection signals for addressing a specific part of the information contained in the key element, for example a sequence of successive addresses. The advantage of the second solution is that the execution station requires less storage capacity, so that it may be simpler. Compromises are also possible: a part of the personal speech information is then read from the key element, but another part of this information remains available in the execution station for further use; in that case the key element must also remain positioned during operation of the execution station. When the interaction with the key element has been (provisionally) completed, the control member 32 supplies a first "ready" signal. Subsequently, the speech input member 38 is released for voice commands (symbolized by a wave train 40). When such a command is received, it is processed in the speech processing member 42; for example, the signal is filtered in a number of narrow-band band-pass filters. The preprocessing of speech prior to recognition is known per se, so that a detailed description will be omitted herefrom. Subsequently, the processing result is converted into a pattern of digital signals, for example a series of code bits which are stored in the memory 44. Hereinafter it is assumed that all personal speech information is stored in the memory 36. The code series from the memory 44 is then compared in the comparison element 46 with all code series which are feasible on the basis of the data stored in the memory 36: the reference information is thus supplied from the reference member 36. When
a given code series is recognized, it is translated into
a recognition code which is applied to the execution
element 48. This execution element may also be for example a word processing device which is capable of receiving voice text and/or processing commands in order to
type, lay-out (margins and spacing) and correct text received. If desired, the text may be provisionally stored
in unprocessed form on a magnetic tape device or similar,
which is in that case included in the route through the
block elements 38, 42, 44. Another possibility is an unattended dispensing station for a selectable amount of
bank notes; if this amount were not selectable, it would
not be necessary to use the invention because in that
case it would merely be necessary to check whether or
not the applicant is authorized. According to a further
possibility, the voice commands are recognized, coded
(for example as 8-bit words) and stored on a magnetic
tape; the execution then concerns the storage of such a
byte on the magnetic tape. The execution element may also
be located in an industrial environment, for example in
a portal crane with eight or more possibilities of movement. The connection between the elements 46 and 48 may
also be wireless, for example utilizing coded infrared
radiation.

The actual speech recognition will not be
described in detail herein, because it can be performed
in the manner adequately described in said United States
Patent Specification 3,883,850, or in another suitable
manner for performing speaker-dependent recognition of
voice commands.

In the described embodiment, the personal
speech information was applied to the memory 36 in order
to be applied to the comparison element 46. In an alternative embodiment, denoted by the broken line 61, the
personal information contains control information which
is applied from the memory 36 to the speech processing element 42 in order to control the operations therein in accordance with the properties of the speech to be applied. For example, in the system disclosed in United States Patent Specification 4,084,245 which may also be used for speech recognition, given parameters can be applied as control information, for example, characteristic frequencies of filter banks, limit values, time delay adjustments and counter positions. In other systems it is also possible to adapt the speech recognition (and hence the selective recognition of the commands) to the voice of the speaker by suitable readjustment of the speech processing process. In some cases it even suffices to render only the speech-processing operation speaker-dependent. In other cases the speech processing operation as well as the comparison in comparison element 46 may be speaker-dependent.

In many cases the execution station must be programmed for a single speaker at a time. In an alternative embodiment there are a number of speakers allowed to access the system, but a sub-set thereof is occupied in rapid alternation with the execution station. This may be the case, for example, in a continuously attended monitoring station for a refinery in which, for example, three operators are always present. In that case it is advantageous if the execution station enables the personal speech information of all three operators to be stored. Corresponding commands by different operators (for example, the different speech characteristics of the word "alarm" or "start") are then translated into the same control code. The number of different speakers admitted to a system will generally be limited, but it may also be unlimited.

DESCRIPTION OF A PROGRAMMING STATION

Figure 2 is a block diagram of a preferred construction for a programming station in which the key element (in this case the element 24) is programmed. The elements shown in Figures 1 and 2 together form a system in accordance with the invention. The programming station comprises the previously mentioned sub-systems 30 and 34 and a control member 52 which may correspond substantially to the control member 32 of Figure 1. When the key element 24 has been correctly positioned, speech can be applied to the speech input member. The content of the speech may be:

a. a list of commands to be ultimately inputted, either in or not in a standard sequence; however, preferably according to a standard sequence. This list may be read from a paper by the speaker. It is alternatively possible to provide a programming station with an image and/or speech output facility. Via such an output, the test station then controls the inputting of each specimen command by the speaker. Each command can be inputted, for example, ten times.

b. a described standard text, for example a text for which it has been established that the voice characteristics of the relevant speaker can be extracted best.

c. an arbitrary text.

The speech thus inputted is processed in the processing member 42, after which the processing results are stored in the memory 54. This processing operation can be performed in the same way as in the processing element 42 of Figure 1 or as described in the United States Patent Specification referred to. Therefore, the capacity of the memory 54 will often be greater than that of the memory 44 of Figure 1. When an adequate amount, of speech has been inputted, the data of memory 54 are successively read and the memory of the key element 24 is filled via output element 56 which comprises, for example, a write amplifier, and also via the connection member 34. Writing may or may not be in the reverse order; this depends on the necessary security level. Subsequently, the key element becomes available for the relevant person. In the above case a), the memory of the key element is filled with the vocabulary of the permissible

0102109

commands (each command once, or several times). In the cases b) and c), the memory of the key element is filled with characteristic parameters of the speaker's voice.

The execution station and the programming station may be embodied in the same station. Usually, these will be different stations, notably there are more execution stations than programming stations.

CONSTRUCTIONS FOR KEY ELEMENTS

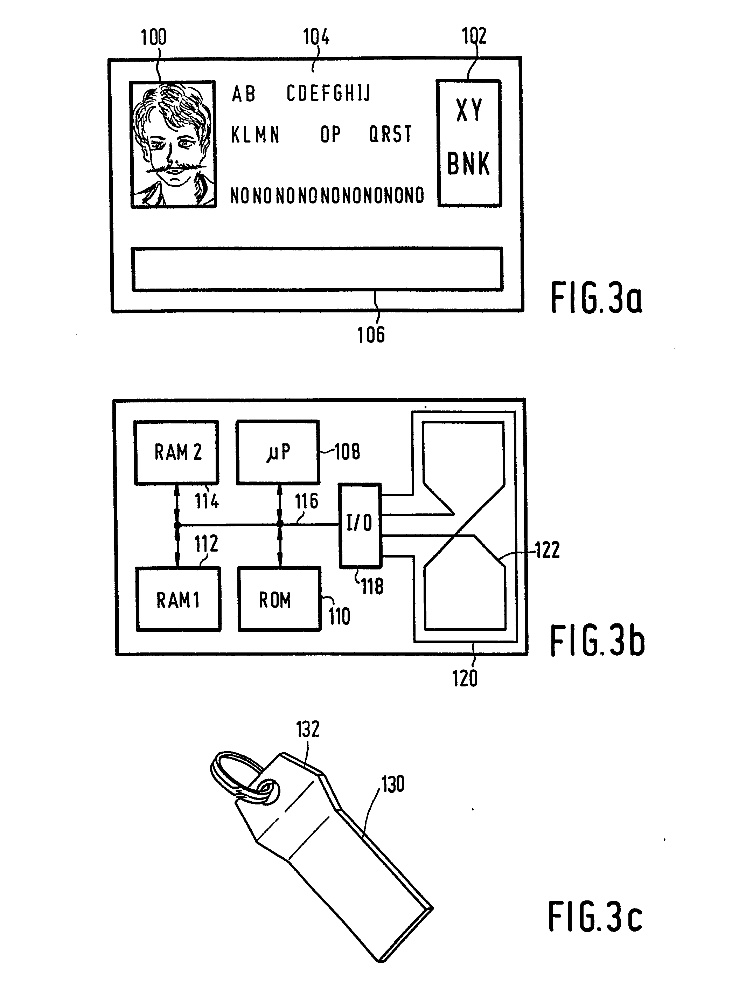

Figure 3a shows a first construction for a key element, that is to say a key element intended for a high security level, i.e. a banking environment. The key element is formed as a passive card having the standard dimensions of a credit card. The card comprises a photograph 100 of the bearer a logo 102 of the issuing agency, personal data 104 of the bearer (name, residence, account numbers) and a strip 106 with digital data which contain a voice characteristic. In the strip there may also be provided a secret owner number whose counterpart must be keyed in or spoken before dispensing can start, and also given data such as the current balance of the owner, credit limitations and the like. The strip 106 may be made of magnetized material having a comparatively high coercitive force. In that case the execution station comprises a read head for such a magnetized strip. Such a read device will not be described herein for the sake of brevity. Other possibilities for data storage may be based on the Wiegand effect, or may be based on one of the processes developed for digital optical recording. In the latter embodiment the data may be encoded in the form of tiny recesses in the surface (or in any intermediate layer below a transparent top layer) that are read out by radiation emitted by a suitable laser. The reflectivity is influenced by the presence or non-presence of a recess and is discriminated against a predetermined reference level. The commands to be issued by the holder of the card are, for example:

- the "start" command which is to be recognized in a speaker-independent manner,

- the name and the secret personal number of the holder,
- the command "issue", followed by the desired amount.

The name and the secret personal number are then verified on the basis of the information extracted from the key element. The verification result may be "O.K." or "not O.K.", the result "O.K." being a necessary requirement to be satisfied for the honouring of the issue command to be subsequently received.

Figure 3b shows a second construction for a key element. This key element is intended for alternate use in different applications, for example as an electronic passport/diary. The external format is the same as that shown in Figure 3a. However, in this case the key element comprises an active electronic system with a microprocessor 108, a program memory 110, a data memory 112 and a parameter memory 114. These elements are interconnected via a data/address bus 116, and they are connected to the environment via an interface 118. The key element can be introduced into the positioning member of the execution station. This may be a slotted member, but also, for example, a horizontal section of the execution station on which the outline of the key element is formed so as to be visible; the key element must be positioned exactly within this outline. When the key element has been positioned in/on the positioning member, it can receive an electromagnetic wave pattern from the execution station via a loop 120. In the interface 118, a power supply is derived therefrom by rectifying, smoothing and voltage control. Via connections (not shown) the other subsystems of the circuit are thus powered. The powering of such a key element (be it without speech recognition) is described in the United States Patent Specification 4,298,793. Furthermore via the loop 122, the circuit is capable of exchanging data with the environment. The interface 118 acts as a transmitter and receiver for this purpose. Memory 110 is permanently preprogrammed. Memory 112 can be addressed for reading as well as for writing. Memory 114 contains at least a number of speech parameters of the owner/holder of the key element and acts exclusively as a read-only memory for the execution station.

When the key element is coupled to the programming station, the functions of the sub-systems of the key element are similar at the level of the data traffic with one exception: the parameter memory 114 now serves for write as well as read operations. This is possible because the parameter memory is constructed, for example, as a so-called PROM or EAROM memory, the programming station comprising known facilities for the (re)programming of such a memory. Programming can be initiated either by means of a start button or by way of speaker-independent recognition of a "start" command as has already been described. Invariable speech parameters can thus be stored in the memory 114 upon presentation to a programming station; it is not possible to falsify these speech parameters upon presentation to an execution station. The advantages of the more complex electronic set-up shown in Figure 3b over that shown in Figure 3a may be diverse:

- the information storage now takes place in mixed read-only/random access memories, so that various categories of information can be stored with a different erasability;

- the information transfer can be protected by means of cryptography; it is thus impossible to copy or falsify a key;

- the key element can be used for different applications, in which an adapted amount of information is transferred each time under the control of the relevant execution station. When the latter concerns, for example, an automated petrol filling station, the dispensing of petrol can be controlled by hand, but the production of the bill can be activated by a voice command. In the case of a simple banking terminal, only bank notes can be

0102109
24.6.1983

delivered; in the case of a more complex station, money transfers to third parties can also be activated, and so on.

Figure 3c shows a third construction for a key element. It is constructed as a plastic strip 130 in which coded speech data are stored; connected thereto is a grip 132 whereby the key element can be connected to a key ring or similar. The speech information is processed in the same manner as described with reference to Figure 3a. A configuration of this kind is particularly suitable, for example, for access control where doors are opened and closed, elevators are selectively controlled etc. by/way of voice commands.

DESCRIPTION OF SOME FLOW CHARTS

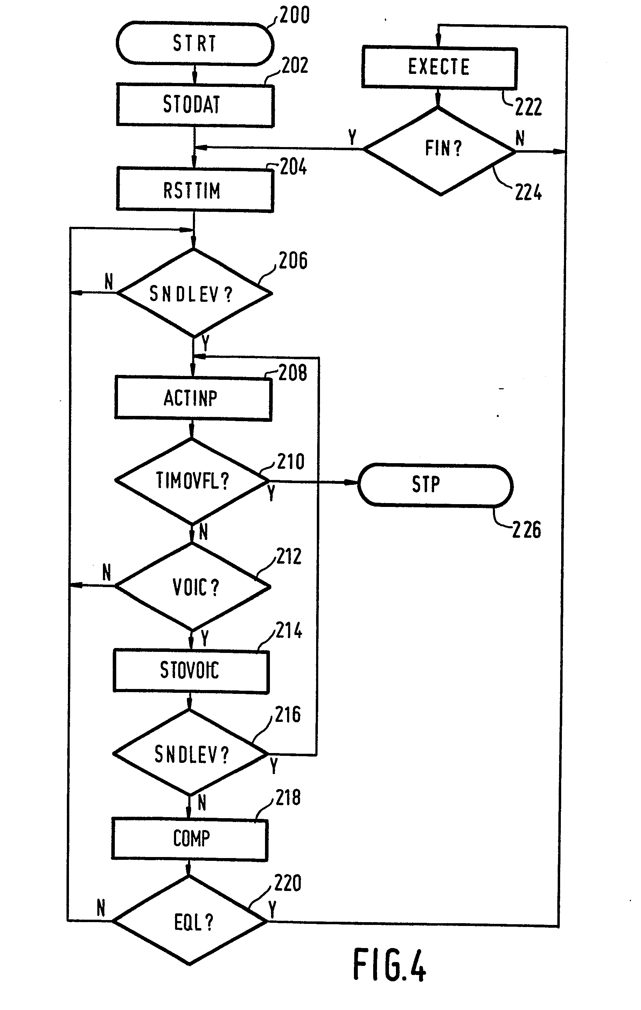

Figure 4 is a flow chart of the operation of an execution station. Block 200 indicates the start, for example in that it is detected that the key element is inserted into the positioning member. In block 202 the personal speech information is read from the key element in order to be stored in the execution station. In block 204 a time updating device in the execution station is reset to a starting position. At the same time an indication element (LED) can indicate that speech input is permissible. In block 206 it is detected whether the speech input member detects an adequate sound intensity. For as long as this is not the case (N), the execution station remains in a waiting loop. When the sound intensity is sufficient (Y), the speech input member is activated in block 208, for example in that a series of sample operations which is synchronized by a timer is performed. In block 210 it is detected whether the time updating device indicates an excessively high elapsed time value. Initially this will not be the case (N), and the acoustic input energy is processed in block 212, for example in order to derive the formants therefrom, and it is also detected whether the acoustic energy concerns one voice sound. This is performed, for example, by a

0102109

very rough comparison of the frequency spectrum with voice parameters originating from the key element. The detection result may be negative, for example when the noise concerns motor noise or the talking of several persons at one time. At this stage the comparison of the processing results and the characteristic properties of the voice of the authorized holder of the key element may also take place. When the result is positive (Y), a portion of voice information or characteristic parameter values thereof is stored in a buffer memory of the execution station (214). In block 216 it is detected whether the sound level is still high enough. For as long as this is the case, the relevant speech command has not yet been terminated (Y) and the system returns to block 208. However, when an interval in the speech occurs (N), the command has been completed; this can be signalled in that the said indication element is extinguished: speech input is then no longer permissible; the speech information stored is then compared in block 218 with a number of specimens. In block 220 it is detected whether some correspondence has been found in block 218. If this is so (Y), the system proceeds to block 222 and the command is executed. In block 224 it is detected whether the command execution has been completed. For as long as this is not the case (N), the system continues the execution of the command. Upon completion of the command execution, it is signalled again that speech input is permissible and the system returns to block 204. If no "voice" has been detected in block 212 or if no command at all has been recognized in block 220, the system returns to block 206. It is then signalled again that (further) speech input is permissible. If the elapsed time value is detected to be too high in block 210, the system proceeds to block 226: STOP. The system is thus suitable for the execution of commands which are given in staccato. If no "O.K." command has been recognized during a given period of time, the operation stops. After execution of block 202, the key element may be removed from the positioning member. For the sake of simplicity, a further deactivation mechanism has been omitted. This mechanism detects within the waiting loop of block 206 whether the counting state of the time updating device is too high and it stops the further processing (like in block 226) in the case of a positive answer.

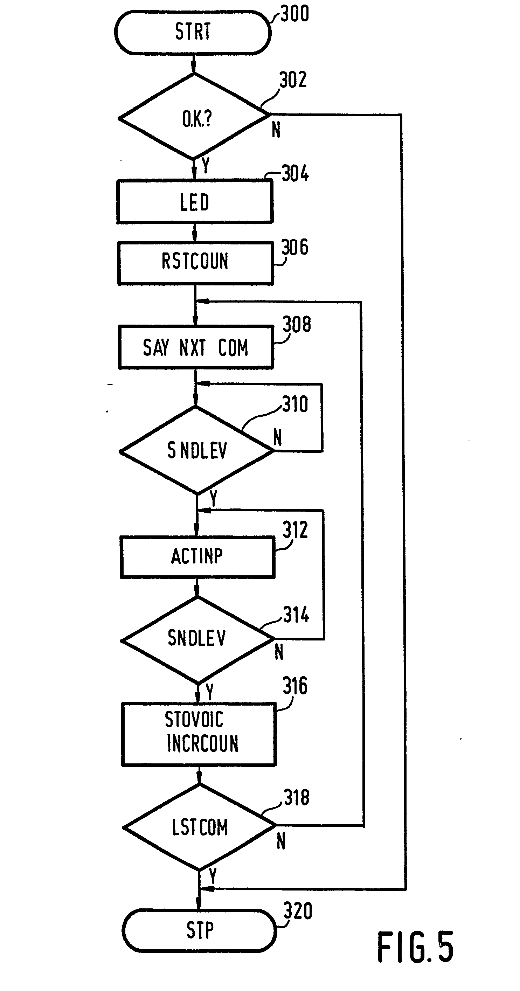

Figure 5 shows a second flow chart to illustrate the operation of a programming station. Block 300 represents the start, for example in that it is detected that the key element has been inserted in the positioning member. In block 302 it is detected whether the key element is permissible. This may be necessary, for example, when each key element can be programmed only once or when each key element has only a given validity period, e.g. only one year. It may also concern a functional test.

When the key element is permissible, an appropriate signal is given in block 304, for example by means of a LED element which signals "OK". In block 306 a command counter is reset to "0". In block 308, the specimen voice command addressed by the command counter is issued in the form of speech, for example in the form "SAY: START"; in reaction thereto the holder of the key element must pronounce the word "START". In block 310 it is detected whether the speech input member detects an adequate sound intensity. For as long as this is not the case (N), the programming station remains in a waiting loop. When the sound intensity is adequate (Y), the speech input member is activated in block 312, for example in that a series of sample operations which is synchronized by a timer is performed. In block 314 it is detected whether the sound level is still adequate. For as long as this is the case, the relevant speech command has not been completed and the inputting is continued in block 312. However, when a voice interval has occurred (N), the command has been completed. In

0102109
24.6.1983

block 316 the speech processing operations are performed and the processing result is applied for storage to the key element still in position. Moreover, the command counter is incremented. In block 318 it is detected whether the last command has occurred. If this is not the case, the system returns to the block 308. When all commands have occurred and also when the key element is not permissible, the system proceeds to block 320 "STOP". A protection against intermediate removal of the key element has been omitted for the sake of simplicity.

CLAIMS

1.        A system for the selective execution of a set
of voice commands which are to be separately inputted,
comprising a first speech input member (38), a first
speech processing element (42) which is connected to
the first speech input member, a comparison element (46)
which is connected to the first speech processing element by way of a first input, a reference element which
can be coupled to a second input of the comparison element,
and an execution element (48) for executing the commands
of said set under the selective control of an output
signal of the comparison element, characterized in that
the first speech input member, the first speech processing element, the comparison element, and the execution
element are accommodated in an execution station (20)
which also comprises a positioning member (22) with a
detection means (30) and an externally activatable start
means, at least a part of the reference element being
accommodated as a memory in an external, portable, key
element (24, 26, 28) in order to store personal speech
information of a holder of the key element in said memory,
the dimensions of the positioning member and the detection
means being adapted to those of the key element, the positioning member and the key element comprising matching
data transfer means for transferring under the control
of an activation signal from said start means, at least
a part of the personal speech information from said memory
to the execution station and hence to said comparison element, so that the execution station can perform a speaker-
dependent recognition of said commands, said system also
comprising a programming station (50) with a second
speech input member, a second speech processing element
which is connected to the second speech input member, and an output member (56) which is connected to the second speech processing element and which can be coupled to a key element presented thereto by way of matching information transfer means in order to load the memory of said key element with personal speech information obtained by way of the second speech processing element.

2.        A system for the selective execution of a set of voice commands which are to be separately applied thereto, comprising a first speech input member, a first speech processing element which is connected to the first speech input member, a comparison element which is connected to the first speech processing element by way of a first input, a reference element which can be coupled to a second input of the comparison element, and an execution element for executing the commands of said set under the selective control of an output signal of the comparison element, characterized in that the first speech input member, the first speech processing element, the comparison element and the execution element are accommodated in an execution station which also comprises a positioning member with a detection means and an externally activatable start means, the first speech processing element having an additional input for receiving personal control signals from a control means having a storage capacity for said personal control signals, at least a part of said storage capacity being accommodated as a memory in an external, portable, key element in order to store in said memory personal control signals of a holder of the key element, the dimensions of the positioning member and the detection means being adapted to those of the key element, the positioning member and the key element comprising matching data transfer means for transferring, under the control of an activation signal from said start means, at least a part of the personal control signals from said memory to the execution station and hence to said first speech processing element, so that the first speech processing element can perform a speaker-dependent speech processing operation and hence the execution element can perform a speaker-dependent recognition of said commands, said system also comprising a programming station with a second speech input member, a second speech processing element which is connected to the second speech input member, and an output member which is connected to the second speech processing element and which can be coupled to a key element which is presented thereto by way of matching data transfer means in order to load the memory of the key element with personal voice parameter signals which are derived by way of the second speech processing element and which serve as control signals for said control means.

3.      An execution station for use in a system as claimed in Claim 1 or 2, characterized in that the detection means is accommodated in a positioning member in the form of a slotted member for the detection of the physical presence of a key element.

4.      An execution station for use in a system as claimed in Claim 1 or 2, characterized in that the first speech processing element and the comparison element are suitable for forming the start means while recognizing, independent of personal information from a key element, a voice start command in order to form said activation signal.

5.      An execution station for use in a system as claimed in Claim 1 or 2, characterized in that said start means are mechanically activatable.

6.      An execution station for use in a system as claimed in Claim 1 or 2, characterized in that the processing of the voice commands received requires the continuous presence of a positioned key element.

7.      A key element for use in a system as claimed in Claim 1 or 2, characterized in that it is constructed substantially as a flat body.

8.      A key element for use in a system as claimed in Claim 1 or 2, characterized in that it comprises connections for communicating read control signals and data signals between said memory and said execution station or said programming station.

9.        A key element for use in a system as claimed in Claim 1, characterized in that said memory is suitable for the storage of voice parameter information.

10.        A comparison device for use in a system as claimed in Claim 1 or 2, or an execution station as claimed in Claim 3, 4 or 5, characterized in that it comprises, in addition to the first speech processing element and the comparison element, and input for an activation signal and a storage medium for external personal information to be received for the selective control of the processing of voice commands received.

FIG.1

FIG.2

100  104  102

AB  CDEFGHIJ

KLMN  OP  QRST

NONONONONONONONONO

XY
BNK

FIG.3a

106

RAM 2    μP    108

114    116

112    I/O

RAM1    ROM    110

118

122

120

FIG.3b

132  130

FIG.3c

3/4

FIG.4

FIG.5

0102109

**EUROPEAN SEARCH REPORT**

Application number

EP 83 20 1123

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DATA REPORT, vol. VIII, no. 3, 1980, pages 4-9, Munich, DE D. KLUGMANN: "Speaking with the computer" * Page 6, middle column, line 22 - right-hand column, line 35 * | 1,2 | G 06 F 3/16 G 07 F 7/10 |
| A | INSTRUMENTS AND CONTROL SYSTEMS, vol. 45, 10, october 1972, pages 29-32, Radnor, PA., US "Automatic voice recognition" * Page 30, right-hand column, line 40 - page 32, line 22 * | 1,2 | |
| A | US-A-3 896 266 (WATERBURY) * Column 6, line 53 - column 7, line 11 * | 1,2 | |
| | ----- | | **TECHNICAL FIELDS SEARCHED (Int. Cl. ³)**  G 06 F 3/16 G 07 F 7/10 |

The present search report has been drawn up for all claims

| Place of search THE HAGUE | Date of completion of the search 21-11-1983 | Examiner LEPEE W. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82